# EUROPÄISCHE PATENTSCHRIFT

(11) **EP 2 145 651 B1**
(45) Veröffentlichungstag und Bekanntmachung des Hinweises auf die Patenterteilung: **18.01.2017**
(21) Anmeldenummer: 09163254.7
(22) Anmeldetag: 19.06.2009
(51) Int. Cl.: A62B 1/04, A62B 35/04, A63B 29/02, F16B 45/02

(54) **Anschlagelement für eine Sicherungseinrichtung**
Connecting element for a securing device
Connecteur pour un dispositif de sécurisation

(30) Priorität: 16.07.2008 DE 102008033431
(43) Veröffentlichungstag der Anmeldung: 20.01.2010
(73) Patentinhaber: Edelrid GmbH & Co. KG, 88316 Isny im Allgau (DE)
(72) Erfinder: Gassner, Stefan, 87547, Missen (DE)
(74) Vertreter: BRP Renaud & Partner mbB Rechtsanwälte Patentanwälte Steuerberater

(56) Entgegenhaltungen:
- EP-A1- 0 363 234
- WO-A1-2008/049899
- FR-A1- 2 694 044

## Beschreibung

Die vorliegende Erfindung betrifft ein Anschlagelement für eine Sicherungseinrichtung zum Schutz von Personen vor Absturz, mit den Merkmalen des Oberbegriffs des Anspruchs 1. Die Erfindung betrifft außerdem eine Sicherungseinrichtung mit mindestens einem solchen Anschlagelement.

Aus der DE 10 2006 010 898 A1 ist eine Sicherungseinrichtung bekannt, die zwei Anschlagelemente aufweist, die jeweils an einem ortsfesten Sicherungselement lösbar anbringbar sind und die jeweils über ein Verbindungselement mit der zu sichernden Person verbindbar sind. Dabei weist jedes Anschlagelement ein als Rolle ausgestaltetes Anlageelement, an dem das als Seil ausgestaltete Sicherungselement bei daran angebrachtem Anschlagelement zur Anlage kommt, sowie eine Riegeleinrichtung auf, die zwischen einem Entriegelungszustand, in dem das jeweilige Anschlagelement am jeweiligen Sicherungselement anbringbar oder davon lösbar ist und einem Verriegelungszustand verstellbar, in dem das jeweilige am jeweiligen Sicherungselement angebrachte Anschlagelement nicht vom jeweiligen Sicherungselement zerstörungsfrei lösbar ist. Ferner umfasst die bekannte Sicherungseinrichtung eine Kopplungseinrichtung, die mit den Riegeleinrichtungen der beiden Anschlagelemente gekoppelt ist, und zwar derart, dass sie im Entriegelungszustand der Riegeleinrichtung des einen Anschlagelements die Riegeleinrichtung des anderen Anschlagelements in deren Verriegelungszustand blockiert.

Durch diese Bauweise der Sicherungseinrichtung kann die Absturzgefahr für die damit gesicherte Person signifikant reduziert werden. Beim Wechsel von einem Sicherungselement zu einem anderen Sicherungselement ist es erforderlich, die beiden Anschlagelemente umzuhängen. Die Kopplungseinrichtung bei der bekannten Sicherungseinrichtung verhindert dabei, dass beide Anschlagelemente versehentlich gleichzeitig vom jeweiligen Sicherungselement entfernt werden, wodurch die Person vorübergehend ungesichert wäre. Somit zwingt die bekannte Sicherungseinrichtung die gesicherte Person, die Anschlagelemente nacheinander umzuhängen, was die Sicherheit erhöht.

Aus der WO 2008/049899 A1 ist eine Weiterbildung der vorstehend beschriebenen Sicherungseinrichtung bekannt, bei welcher die Riegeleinrichtung des jeweiligen Anschlagelements einen zwischen einer Aktivstellung und einer Passivstellung verstellbaren Auslösehebel aufweist, der in seiner Aktivstellung die Riegeleinrichtung in deren Entriegelungszustand blockiert und der durch das Anbringen des Anschlagelements am Sicherungselement zwangsläufig in seine Passivstellung überführbar ist, in welcher er ein Verstellen der Riegeleinrichtung in deren Verriegelungszustand ermöglicht. Beim bekannten Anschlagelement ragt der Auslösehebel in seiner Aktivstellung in eine Einführöffnung hinein, durch die ein das Sicherungselement bildendes Seil zu einer als Anlageelement dienenden Rolle gelangt, wenn das Anschlagelement am Sicherungselement, also am Seil angebracht wird. In der Folge wird beim Anbringen des karabinerartig ausgestalteten Anschlagelements am Sicherungsseil der Auslösehebel zwangsläufig in seine Passivstellung verstellt, wodurch ein Verstellen der Riegeleinrichtung in deren Verriegelungszustand ermöglicht wird. Die Handhabung des Anschlagelements wird dadurch vereinfacht. Gleichzeitig wird eine Fehlbedienung der Sicherungseinrichtung erschwert, da die Blockierung des einen Anschlagelements bei ordnungsgemäßer Anwendung der Sicherungseinrichtung nur durch Anbringen des anderen Anschlagelements am Sicherungsseil aufgehoben werden kann.

Ferner ist aus der DE 10 2005 009 946 B3 eine Sicherungseinrichtung bekannt, die aus einem am Körper des Benutzers befestigten Auffanggurt, zwei Verbindungsmitteln mit je einem Karabiner, über welche eine verschiebbare und lösbare Verbindung zwischen dem Auffanggurt und einem Tragseil hergestellt werden kann, sowie einer elektronischen Schaltung zur Überwachung der korrekten Sicherung des Benutzers besteht. Dabei überwacht die elektronische Schaltung das Einhängen der Karabiner am Tragseil und generiert ein akustisches Warnsignal, sobald nicht mindestens einer der beiden Karabiner am Tragseil eingehängt ist. Ferner kann die bekannte Sicherungseinrichtung außerdem so ausgestaltet sein, dass die elektronische Schaltung einen Öffnungsmechanismus eines Karabiners über eine elektromagnetische Stelleinrichtung blockiert, sobald der andere Karabiner geöffnet und/oder vom Tragseil ausgehängt wird, wodurch ein gleichzeitiges Aushängen beider Karabiner und somit eine versehentliche Fehlbedienung der Sicherungseinrichtung durch den Benutzer verhindert wird.

Weitere Anschlagelemente sind in EP0 363 234 A1 und FR 2694 044 offenbart.

Die vorliegende Erfindung beschäftigt sich mit dem Problem, für ein Anschlagelement der eingangs genannten Art bzw. für eine damit ausgestattete Sicherungseinrichtung eine verbesserte Ausführungsform anzugeben, die sich insbesondere durch eine preiswerte Realisierbarkeit bei vergleichsweise hoher Funktionssicherheit auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das jeweilige Anlageelement in eine Auslöseeinrichtung zu integrieren, die ein Freigeben und ein Blockieren der jeweiligen Riegeleinrichtung in deren Entriegelungszustand ermöglicht. Diese Integration erfolgt dabei so, dass die Auslöseeinrichtung beim Anbringen des Anschlagelementes an das Sicherungselement durch das Anlegen bzw. Andrücken des Sicherungselements am Anlageelement in ihre Passivstellung verstellbar ist, in welcher sie ein Verstellen der Riegeleinrichtung in deren Verriegelungszustand ermöglicht. Durch diese Bauweise kann auf einen separaten Auslösehebel, der in seiner Aktivstellung in eine Einführöffnung des Anschlagelements hineinragt, verzichtet werden. Beim erfindungsgemäßen Anschlagelement wird hierzu das ohnehin vorhandene Anlageelement verwendet. Dieses findet sich am Ende der Einführöffnung, also ebenfalls im Verstellweg eines beim Anbringen des Anschlagelements am Sicherungselement durch die Einführöffnung zum Anlageelement geführten Sicherungselements. Die Erfindung nutzt somit das ohnehin im Verstellweg bzw. am Ende des Verstellwegs angeordnete Anlageelement, um die jeweilige Riegeleinrichtung von deren Entriegelungszustand in deren Verriegelungszustand zu überführen. Insgesamt kann dadurch der Aufbau des Anschlagelements vereinfacht werden. Ferner kann auf den zusätzlichen Auslösehebel verzichtet werden, der beim Anbringen des Anschlagelements am Sicherungselement verschleißt und bei Fehldienung außerdem einer Beschädigungsgefahr ausgesetzt ist. Insgesamt lassen sich somit die Funktionssicherheit und Lebensdauer des Anschlagelements erhöhen.

Bei einer vorteilhaften Ausführungsform umfasst die Auslöseeinrichtung einen Lagerhebel, der, z.B. an einem Gehäuse des Anschlagelements, schwenkbar gelagert ist und der mit der Riegeleinrichtung antriebsgekoppelt ist. Beispielsweise kann der Lagerhebel mit einem Riegel der Riegeleinrichtung gekoppelt sein, der zwischen einer dem Verriegelungszustand der Riegeleinrichtung zugeordneten Verriegelungsstellung und einer dem Entriegelungszustand der Riegeleinrichtung zugeordneten Entriegelungsstellung verschwenkbar ist. Zusätzlich oder alternativ kann der Lagerhebel mit einem Sicherungshebel der Riegeleinrichtung gekoppelt sein, der zwischen einer den vorgenannten Riegel in dessen Verriegelungsstellung blockierenden Sicherungsstellung und einer ein Verschwenken des genannten Riegels zwischen dessen Verriegelungsstellung und dessen Entriegelungsstellung ermöglichenden Entsicherungsstellung verschwenkbar ist. Der Lagerhebel koppelt somit die Auslöseeinrichtung mit der Riegeleinrichtung, derart, dass die Riegeleinrichtung in ihrem Entriegelungszustand blockiert ist, wenn die Auslöseeinrichtung aktiviert, also in ihre Aktivstellung verstellt ist. Der Lagerhebel kann somit in der Aktivstellung der Auslöseeinrichtung den zuvor genannten Riegel in dessen Entriegelungsstellung und/oder den zuvor genannten Sicherungshebel in dessen Entsicherungsstellung blockieren. Erreicht wird dies beispielsweise durch eine spezielle Kinematik für die miteinander zusammenwirkenden Komponenten, die für den Lagerhebel zwei Übertotpunktstellungen ermöglicht. Derartige Übertotpunktstellungen sind stabil und bilden die Aktivstellung und die Passivstellung der Auslöseeinrichtung. Zwischen diesen stabilen Stellungen befindet sich eine labile Totpunktlage, von der aus die miteinander gekoppelten Komponenten, insbesondere federbelastet, in die eine oder in die andere Übertotpunktstellung beim Überwinden der Totpunktlage selbsttätig verstellt werden.

Entsprechend einer anderen Weiterbildung kann die Auslöseeinrichtung einen Anlagehebel aufweisen, der das Anlageelement aufweist, z.B. in Form einer Rolle, oder selbst das Anlageelement, z.B. in Form einer Gleitkontur, bildet. Dieser Anlagehebel ist verstellbar angeordnet, und zwar so, dass er in der Passivstellung der Auslöseeinrichtung am Ende einer Einführöffnung bzw. eines Verstellwegs für das Sicherungselement angeordnet ist, während er in der Aktivstellung der Auslöseeinrichtung in die Einführöffnung bzw. in den Verstellweg hineinragt. Hierdurch wird beim Anbringen des Anschlagelements am Sicherungselement zwangsläufig eine Verstellung des Anlagehebels bewirkt, sobald das Sicherungselement am Anlageelement zur Anlage kommt und gegebenenfalls entsprechende Anlagekräfte übertragen werden. Der Anlagehebel kann dadurch von seiner in die Einführöffnung hineinragenden Stellung in seine das Ende der Einführöffnung bildende Stellung verschwenkt werden, wodurch die Auslöseeinrichtung von deren Aktivstellung in deren Passivstellung überführt wird. Über diesen Anlagehebel wird somit zusätzlich eine funktionelle Integration des Anlageelements in die Auslöseeinrichtung geschaffen.

Bei einer vorteilhaften Weiterbildung kann die Auslöseeinrichtung einen Kopplungshebel aufweisen, der den genannten Anlagehebel mit dem vorstehend genannten Lagerhebel koppelt. Die so realisierte Zwangskopplung bewirkt, dass ein Verstellen der Riegeleinrichtung von deren Verriegelungszustand in deren Entriegelungszustand zwangsläufig den Anlagehebel in die Einführöffnung hineinverstellt, also die Auslöseeinrichtung von deren Passivstellung in deren Aktivstellung überführt. Zusätzlich oder alternativ bewirkt die genannte Zwangskopplung, dass die Riegeleinrichtung aus ihrem Entriegelungszustand zwangsläufig in ihren Verriegelungszustand überführt wird, wenn der Anlagehebel durch das Sicherungselement an das Ende der Einführöffnung verstellt wird, also wenn die Auslöseeinrichtung aus ihrer Aktivstellung in ihre Passivstellung überführt wird. Die Zwangskopplung zwischen Auslöseeinrichtung und Riegeleinrichtung hat wie erläutert einerseits den Vorteil, dass die Riegeleinrichtung automatisch in deren Verriegelungszustand überführt werden kann, wenn durch Anbringen des Anschlagelements am Sicherungselement die Auslöseeinrichtung von deren Aktivstellung in deren Passivstellung überführt wird. Andererseits bietet diese Zwangskopplung darüber hinaus den großen Vorteil, dass bei am Sicherungselement angebrachtem Anschlagelement die Riegeleinrichtung nur dann in ihren Entriegelungszustand überführbar ist, wenn auch die Auslöseeinrichtung in ihre Aktivstellung überführbar ist, was nur dann möglich ist, wenn das Anlageelement entlastet ist, also wenn insbesondere keine Haltekraft bzw. keine Sicherungskraft zwischen Anschlagelement und Sicherungselement übertragen wird. Ein versehentliches Entfernen des Anschlagelements vom Sicherungselement bei belastetem Anschlagelement kann dadurch effektiv vermieden werden.

Eine erfindungsgemäße Sicherungseinrichtung charakterisiert sich dadurch, dass sie zumindest ein erfindungsgemäßes Anschlagelement aufweist, das mit der zur sichernden Person verbindbar ist. Entsprechend einer vorteilhaften Ausführungsform dieser Sicherungseinrichtung sind zwei solche Anschlagelemente sowie eine Kopplungseinrichtung vorgesehen, die mit den Riegeleinrichtungen der beiden Anschlagelemente gekoppelt ist, derart, dass die Kopplungseinrichtung im Entriegelungszustand der Riegeleinrichtung des einen Anschlagelements die Riegeleinrichtung des anderen Anschlagelements in deren Verriegelungszustand blockiert. Somit lässt sich insbesondere immer nur ein Anschlagelement vom Sicherungselement entfernen bzw. umhängen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht einer Sicherungseinrichtung,
- Fig. 2 bis 4: jeweils eine teilweise geschnittene Seitenansicht eines Anschlagelements bei unterschiedlichen Betätigungszuständen,
- Fig. 5 und 6: jeweils eine vergrößerte Schnittansicht wie in den Fig. 2 bis 4 im Bereich eines Sperrhebels, bei unterschiedlichen Betätigungszuständen.

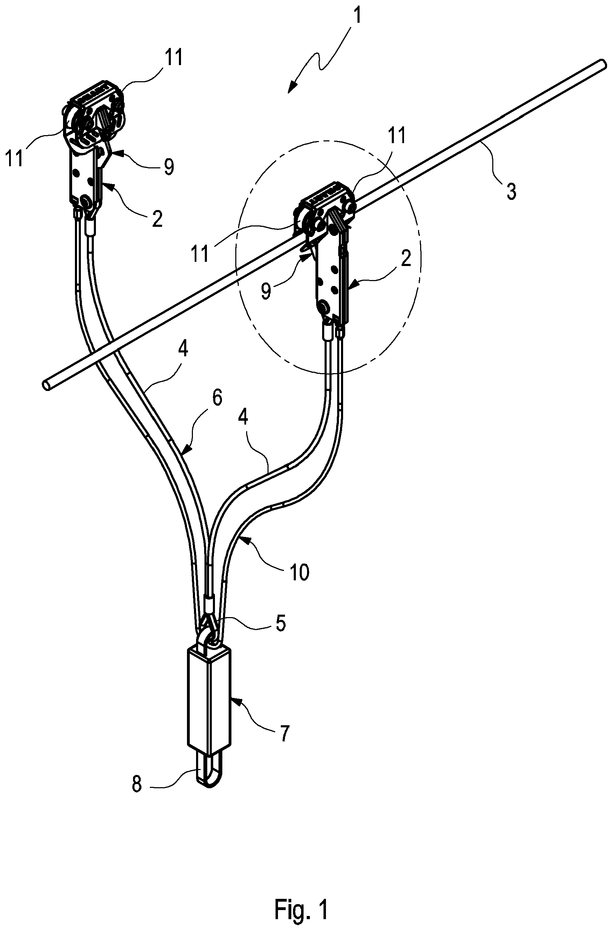

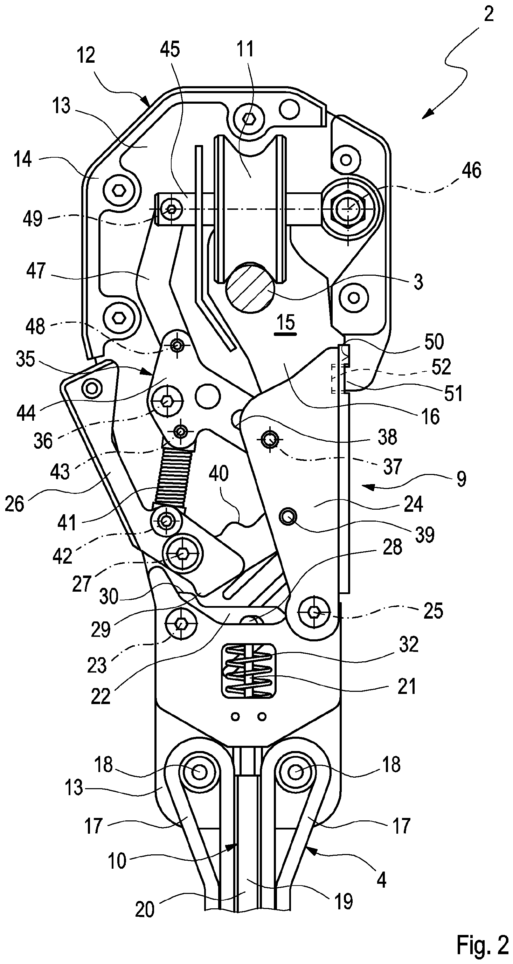

Entsprechend Fig. 1 umfasst eine Sicherungseinrichtung 1, die zum Schutz einer nicht gezeigten Person vor einem Absturz dient, zwei Anschlagelemente 2. Jedes Anschlagelement 2 ist so ausgestaltet, dass es an einem ortsfesten Sicherungselement 3 lösbar anbringbar ist. In Fig. 1 ist nur das rechts dargestellte Anschlagelement 2 an dem hier als Seil ausgestalteten Sicherungselement 3 angeschlagen bzw. angebracht, während das links dargestellte Anschlagelement 2 vom Sicherungselement 3 entfernt ist. Des Weiteren ist jedes Anschlagelement 2 jeweils mit einem Verbindungselement 4 verbunden, wobei das jeweilige Verbindungselement 4 mit der jeweils zu sichernden Person verbindbar ist. Bei der in Fig. 1 gezeigten Ausführungsform ist das Verbindungselement 4 ein Seil. Bei den Ausführungsformen der Fig. 2 bis 6 kann das Verbindungselement 4 durch einen Gurt gebildet sein. Es ist klar, dass die Verbindungselemente 4 beispielsweise auch als Kette oder dergleichen ausgestaltet sein können.

Im Beispiel gemäß Fig. 1 bilden die beiden Verbindungselemente 4 eine gemeinsame Schlaufe 5, mit der sie gemeinsam an der zu sichernden Person anbringbar sind. Die beiden Verbindungselemente 4 bilden hier somit ein gemeinsames Verbindungsbauteil 6. Ebenso können auch zwei vollständig getrennte Verbindungselemente 4 verwendet werden. Grundsätzlich können die Verbindungselemente 4 bzw. das Verbindungsbauteil 6 über die Schlaufe 5 mit Hilfe eines Karabiners oder dergleichen direkt an einem Sicherheitsgurt der abzusichernden Person befestigt werden. Im vorliegenden Fall ist außerdem ein Falldämpfer 7 vorgesehen, der zum Umfang der Sicherungseinrichtung 1 gehören kann. Die Verbindungselemente 4 bzw. das Verbindungsbauteil 6 sind bzw. ist am Falldämpfer 7 befestigt, der seinerseits mittels einer Schlaufe 8 an der jeweiligen Personen bzw. mittels Karabiner an deren Sicherheitsgurt befestigt werden kann.

Jedes Anschlagelement 2 weist eine Riegeleinrichtung 9 auf. Die jeweilige Riegeleinrichtung 9 ist zwischen einem Entriegelungszustand und einem Verriegelungszustand verstellbar. Im Entriegelungszustand ist das jeweilige Anschlagelement 2 am jeweiligen Sicherungselement 3 anbringbar bzw. davon lösbar. Im Unterschied dazu ist das jeweilige Anschlagelement 2 im Verriegelungszustand nicht mehr zerstörungsfrei vom jeweiligen Sicherungselement 3, an dem es angebracht ist, lösbar.

Die hier vorgestellte Sicherungseinrichtung 1 umfasst außerdem eine Kopplungseinrichtung 10. Diese ist mit den Riegeleinrichtungen 9 der beiden Anschlagelemente 2 gekoppelt. Diese Kopplung erfolgt dabei so, dass die Kopplungseinrichtung 10 im Entriegelungszustand der Riegeleinrichtung 9 des einen Anschlagelements 2 die Riegeleinrichtung 9 des anderen Anschlagelements 2 in deren Verriegelungszustand blockiert. Das bedeutet, dass beim Entriegeln der einen Riegeleinrichtung 9 über die Kopplungseinrichtung 10 zwangsläufig die andere Riegeleinrichtung 9 in deren Verriegelungszustand blockiert wird und dann nicht mehr entriegelt werden kann. Die Kopplungseinrichtung 10 arbeitet bevorzugt rein mechanisch, insbesondere hydraulisch oder pneumatisch. Grundsätzlich ist auch eine elektrisch arbeitende Kopplungseinrichtung 10 denkbar. Bevorzugt sind jedoch die fremdenergiefrei arbeitenden Ausführungsformen.

Die in Fig. 1 gezeigten Anschlagelemente 2 sind als Laufrollen ausgestaltet, die jeweils zwei hintereinander angeordnete Rollen 11 aufweisen, mit denen das jeweilige Anschlagelement 2 auf dem als Seil ausgebildeten Sicherungselement 3 abrollen kann. Bei den bevorzugten Ausführungsformen der Fig. 2 bis 6 ist das jeweilige Anschlagelement 2 karabinerartig bzw. als Karabinerhaken ausgestaltet. Dabei weist das jeweilige Anschlagelement 2 entsprechend den Fig. 2 bis 4 jeweils ein Anlageelement 11 auf, das bei am Sicherungselement 3 angebrachtem Anschlagelement 2 mit dem Sicherungselement 3 zusammenwirkt bzw. an diesem zur Anlage kommt. Bei den gezeigten, bevorzugten Beispielen ist dieses Anlageelement 11 als Rolle ausgeführt, die im Folgenden ebenfalls mit dem Bezugszeichen 11, also als Rolle 11 bezeichnet wird. Es ist klar, dass anstelle einer Rolle auch ein beliebiges anderes Anlageelement 11 verwendet werden kann, beispielsweise eine Art Gleitstein oder einfach nur eine Hakenkontur des Anschlagelements 2. Die Verwendung der Rolle 11 als Anlageelement 11 gewährleistet minimalen Verschleiß und einen komfortablen Betrieb. In der nachfolgenden Beschreibung wird die bevorzugte Variante mit dem als Rolle ausgestalteten Anlageelement 11 näher erläutert. Soweit sinnvoll sind die mit Bezug auf die Rolle 11 gemachten Ausführungen analog auf ein beliebiges anderes Anlageelement 11 übertragbar.

Die nachfolgende Beschreibung der Fig. 2 bis 6 bezieht sich auf den in Fig. 1 mit unterbrochener Linie umschlossenen Teilbereich der Sicherungseinrichtung 1. Mit anderen Worten, es wird der Aufbau eines einzelnen Anschlagelements 2 näher erläutert. Es ist klar, dass grundsätzlich beide Anschlagelemente 2 der Sicherungseinrichtung 1 baugleich ausgestaltet sein können, jedoch nicht müssen.

Entsprechend den Fig. 2 bis 6 besitzt das jeweilige Anschlagelement 2 ein Gehäuse 12, das im Wesentlichen aus Blechformteilen hergestellt ist. Das Gehäuse 12 weist zwei Seitenwangen 13 auf, zwischen denen eine Abdeckung 14 angeordnet ist. Durch die Schnittdarstellung ist nur eine der sich gegenüberliegenden Seitenwangen 13 erkennbar. In einem oberen Bereich des Gehäuses 12 ist die Rolle 11 drehbar gelagert, insbesondere mittels eines Kugellagers. In diesem oberen Bereich befindet sich auch ein Aufnahmeraum 15 zur Aufnahme des jeweiligen Sicherungselements 3. Um das jeweilige Sicherungselement 3 bis in den Aufnahmeraum 15 einbringen zu können bzw. um das Sicherungselement 3 wieder aus dem Aufnahmeraum 15 herausbringen zu können, ist der Aufnahmeraum 15 bzw. das Anschlagelement 2 mit einer Einführöffnung 16 ausgestattet. Insgesamt ist das Gehäuse 12 durch die Aufnahme 15 und die Einführöffnung 16 wie ein Haken ausgestaltet. Das Anschlagelement 2 bildet insbesondere einen Karabinerhaken.

In einem unteren Bereich des Gehäuses 12 ist das Verbindungselement 4 befestigt. Im gezeigten Beispiel besteht das Verbindungselement 4 aus zwei separaten Gurten 17, die unabhängig voneinander, z.B. über separate Stegbolzen 18, jeweils an beiden Seitenwangen 13 befestigt sind. Unterhalb des Gehäuses 12 können die beiden Gurte 17 miteinander vernäht sein, insbesondere so, dass sie einen hier nicht erkennbaren Schlauch bilden können. Bei der hier gezeigten, bevorzugten Ausführungsform umfasst die Kopplungseinrichtung 10 ein Kraftübertragungselement 19, das von der Riegeleinrichtung 9 des einen Anschlagelements 2 zur Riegeleinrichtung 9 des anderen Anschlagelements 2 führt. Dieses Kraftübertragungselement 19 kann zweckmäßig innerhalb des Schlauchs verlegt werden, wodurch es im normalen Gebrauch der Sicherungseinrichtung 1 hinreichend vor Beschädigungen geschützt ist. Das Kraftübertragungselement 19 ist vorzugsweise ein Bowdenzug, der in üblicher Weise aus einer druckstabilen Hülse 20 und einem darin geführten zugstabilen Kabel 21 besteht, das auch als Seele 21 bezeichnet werden kann.

Entsprechend den Fig. 2 bis 6 umfasst die Kopplungseinrichtung 10 für die Riegeleinrichtung 9 des jeweiligen Anschlagelements 2 einen Sperrhebel 22. Dieser Sperrhebel 22 ist um eine Sperrhebel-Schwenkachse 23, die in den Fig. 2 bis 6 senkrecht auf der Zeichnungsebene steht, verschwenkbar am Gehäuse 12 gelagert. Dabei ist der Sperrhebel 22 in eine Sperrstellung verschwenkbar, in welcher er die jeweilige Riegeleinrichtung 9 in deren Verriegelungszustand blockiert. Bei der mit dem Bowdenzug als Kraftübertragungselement 19 arbeitenden Ausführungsform ist das Kabel 21 am jeweiligen Sperrhebel 22 festgelegt. Die Hülse 20 ist am Gehäuse 12 abgestützt.

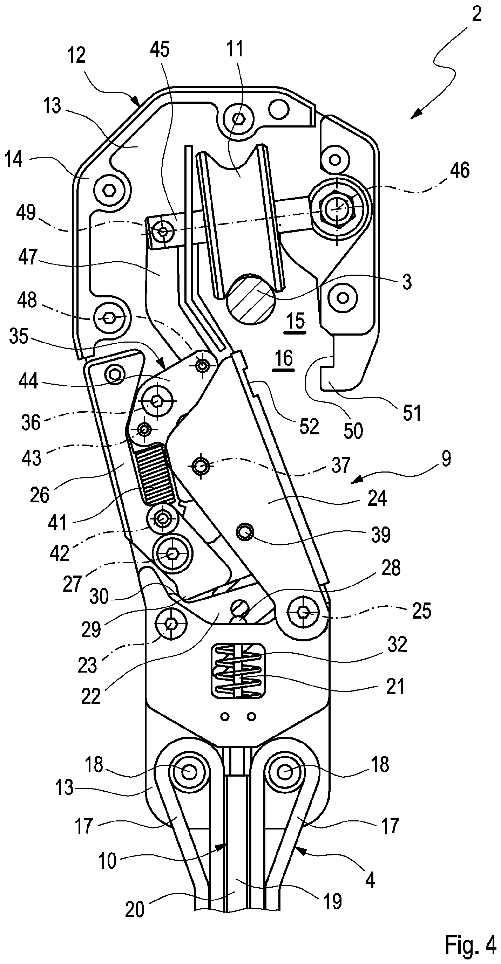

Die Riegeleinrichtung 9 weist hier einen Riegel 24 auf, der um eine Riegel-Schwenkachse 25 verschwenkbar ist, die in den Fig. 2 bis 6 senkrecht zur Zeichnungsebene verläuft. Der Riegel 24 ist dabei zwischen einer dem Verriegelungszustand der Riegeleinrichtung 9 zugeordneten Verriegelungsstellung und einer dem Entriegelungszustand der Riegeleinrichtung 9 zugeordneten Entriegelungsstellung verschwenkbar. In den Fig. 2, 3, 5 und 6 befindet sich der Riegel 24 in seiner Verriegelungsstellung, während er sich in Fig. 4 in seiner Entriegelungsstellung befindet.

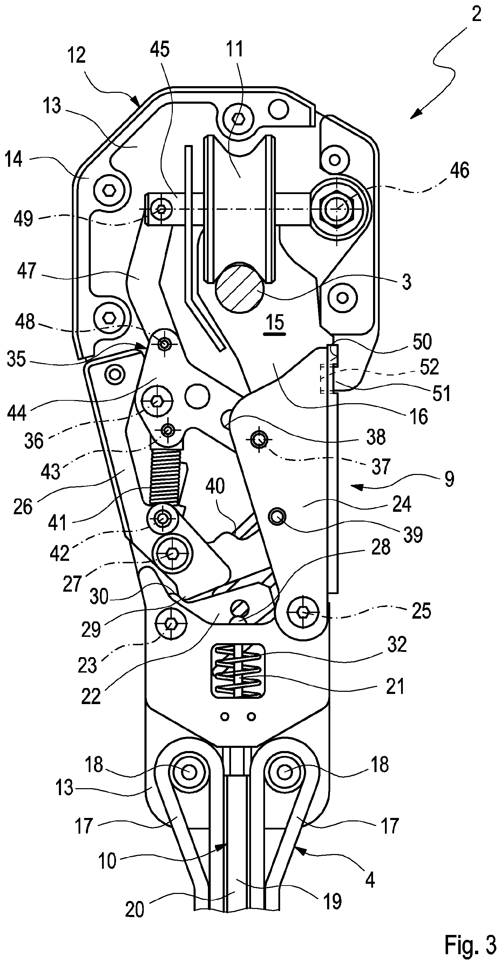

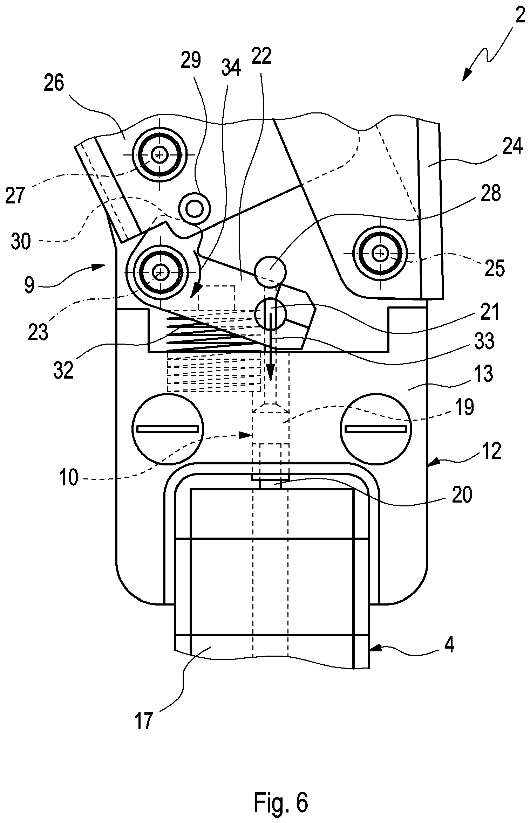

Des Weiteren umfasst die Riegeleinrichtung 9 hier einen Sicherungshebel 26, der um eine Sicherungshebel-Schwenkachse 27 verschwenkbar ist, die in den Darstellungen der Fig. 2 bis 6 senkrecht zur Zeichnungsebene verläuft. Der Sicherungshebel 26 ist zwischen einer Sicherungsstellung, in welcher er den Riegel 24 in dessen Verriegelungsstellung blockiert, und einer Entsicherungsstellung oder Freigabestellung verschwenkbar, in welcher er ein Verschwenken des Riegels 24 zwischen dessen Verriegelungsstellung und dessen Entriegelungsstellung ermöglicht. Zur Realisierung dieses Zusammenwirkens zwischen Sicherungshebel 26 und Riegel 24 ist hier exemplarisch am Riegel 24 ein Steuerbolzen 39 ausgebildet, der mit einer am Sicherungshebel 26 ausgebildeten Steuerkulisse 40 zusammenwirkt. In den Fig. 3, 4 und 5 befindet sich der Sicherungshebel 26 in seiner Entsicherungsstellung, während er sich in den Fig. 2 und 6 in seiner Sicherungsstellung befindet.

Bei den hier gezeigten Ausführungsformen wirkt nun der Sperrhebel 22 mit dem Sicherungshebel 26 zusammen. Das bedeutet, dass der Sperrhebel 22 in seiner Sperrstellung den Sicherungshebel 26 in dessen Sicherungsstellung blockiert. Da in der Sicherungsstellung des Sicherungshebels 26 durch den Sicherungshebel 26 der Riegel 24 in dessen Verriegelungsstellung blockiert ist, befindet sich die zugehörige Riegeleinrichtung 9 in deren Verriegelungszustand und kann nicht vom Sicherungselement 3 entfernt werden.

Alternativ ist es grundsätzlich ebenso möglich, den Sperrhebel 22 so anzuordnen bzw. auszugestalten, dass er mit dem Riegel 24 direkt zusammenwirkt, so dass der Sperrhebel 22 in seiner Sperrstellung den Riegel 24 in dessen Verriegelungsstellung blockiert. Ebenso ist grundsätzlich denkbar, den Sperrhebel 22 so auszugestalten bzw. anzuordnen, dass er gleichzeitig sowohl mit dem Riegel 24 als auch mit dem Sicherungshebel 26 zusammenwirkt.

Das Kraftübertragungselement 19 koppelt die beiden Sperrhebel 22 der beiden Riegeleinrichtungen 9 so miteinander, dass eine Schwenkbetätigung des einen Sperrhebels 22 den anderen Sperrhebel 22 in dessen Sperrstellung verschwenkt. Bei der hier gezeigten Ausführungsform ist der Sicherungshebel 26 zur Betätigung des Sperrhebels 22 vorgesehen. Dementsprechend wirkt hier der Sicherungshebel 26 auf geeignete Weise mit dem zugehörigen Sperrhebel 22 zusammen. Ein Verschwenken des Sicherungshebels 26 in dessen Entsicherungsstellung führt somit zu einer Schwenkbetätigung des Sperrhebels 22, die den über das Kraftübertragungselement 19 gekoppelten anderen Sperrhebel 22 in dessen Sperrstellung verschwenkt. Es ist klar, dass grundsätzlich auch eine antriebsmäßige Kopplung zwischen dem Riegel 24 und dem Sperrhebel 22 vorgesehen sein kann. Bevorzugt wird jedoch die hier vorgeschlagene Variante, bei welcher bereits die Betätigung des Sicherungshebels 26 den Sperrhebel 22 betätigt.

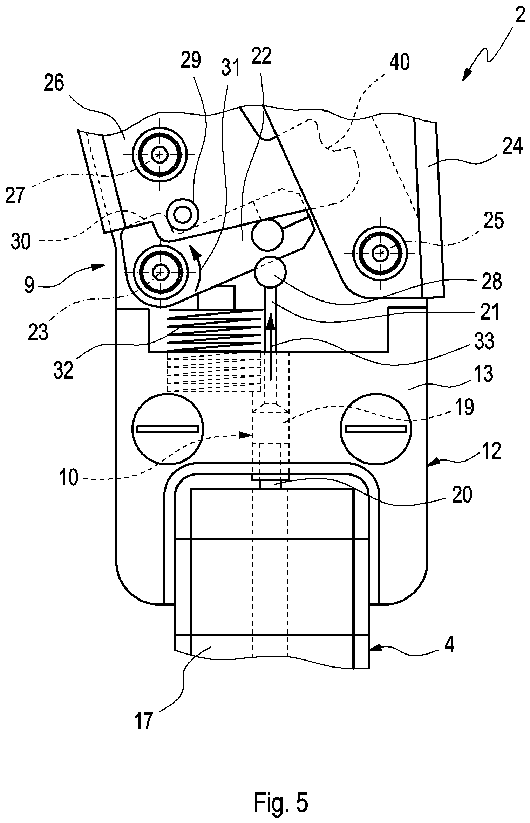

Die Fig. 5 und 6 veranschaulichen die unterschiedlichen Schwenkvorgänge des Sperrhebels 22. Dabei ist ein Verbindungsglied 28, über das das Kabel 21 des jeweiligen Bowdenzugs 19 am Sperrhebel 22 festgelegt ist, in derjenigen Relativlage wiedergegeben, in der sich dieses Verbindungsglied 28 befindet, wenn der Sperrhebel 22 eine Ruhelage einnimmt. Der jeweilige Sperrhebel 22 nimmt seine Ruhelage dann ein, wenn beide Riegeleinrichtung 9 jeweils ihren Verriegelungszustand aufweisen.

In Fig. 5 ist der Sicherungshebel 26 in seine Entsicherungsstellung verschwenkt. Der Sicherungshebel 26 weist einen Steuerbolzen 29 auf, der mit einer am Sperrhebel 22 ausgebildeten Steuerkulisse 30 zusammenwirkt. Die Fig. 2 bis 4 zeigen eine Variante, bei der anstelle eines Steuerbolzens eine Steuerkontur 29 am Sicherungshebel 26 ausgebildet ist, welche die gleiche Funktionalität erfüllt. Die Steuerkulisse 30 und der Steuerbolzen 29 sind so aufeinander abgestimmt, dass durch das Verschwenken des Sicherungshebels 26 in dessen Entsicherungsstellung der Sperrhebel 22 so verschwenkt wird, dass er eine Zugkraft in das Kraftübertragungselement 19 einleitet. In Fig. 5 erfolgt die Schwenkbewegung entgegen dem Uhrzeigersinn in einer Drehrichtung 31, die durch einen Pfeil angedeutet ist. Diese Drehbewegung des Sperrhebels 22 kann durch eine Druckfeder 32 unterstützt sein. Die mit Hilfe des so schwenkbetätigten Sperrhebels 22 in das Kraftübertragungselement 19 eingeleitete Zugkraft ist hier durch einen nach oben orientierten Pfeil angedeutet und mit 33 bezeichnet.

Fig. 6 zeigt quasi das andere Ende des Kraftübertragungselements 19, das die Zugkraft 33 auf den Sperrhebel 22 der anderen Riegeleinrichtung 9 überträgt. Dementsprechend ist diese Zugkraft 33 in Fig. 6 nach unten orientiert. In der Folge verschwenkt der Sperrhebel 22 in entgegengesetzter Drehrichtung, die hier durch einen Pfeil symbolisiert und mit 34 bezeichnet ist. Diese andere Drehrichtung 34 ist hier im Uhrzeigersinn orientiert. Sofern der Sicherungshebel 26 seine Sicherungsstellung einnimmt, wirken auch hier die Steuerbolzen 29 und die Steuerkontur 30 zusammen. Die Steuerkontur 30 wird hierbei in den Verstellweg des Steuerbolzens 29 bewegt, wodurch dieser an der Steuerkontur 30 wie an einem Anschlag anliegt. In der Folge ist die Schwenkbarkeit des Sicherungshebels 26 blockiert, so dass dieser nicht mehr aus seiner Sicherungsstellung heraus verschwenkt werden kann. Dementsprechend verschwenkt der Sperrhebel 22 zum Blockieren der jeweiligen Riegeleinrichtung 9 in der einen Drehrichtung 34 aus seiner Ruhelage heraus in seine Sperrstellung, während er bei seiner Schwenkbetätigung in der entgegengesetzten Drehrichtung 31 aus seiner Ruhelage heraus verschwenkt wird.

Gemäß den Fig. 2 bis 4 umfasst die jeweilige Riegeleinrichtung 9 außerdem eine Auslöseeinrichtung 35, die zwischen einer Aktivstellung und einer Passivstellung bzw. zwischen einem Aktivzustand und einem Passivzustand verstellbar ist. In der Aktivstellung blockiert die Auslöseeinrichtung 35 die Riegeleinrichtung 9 in deren Entriegelungszustand. In ihrer Passivstellung ermöglicht die Auslöseeinrichtung 35 ein Verstellen der Riegeleinrichtung 9 in deren Verriegelungszustand. Des Weiteren ist die Auslöseeinrichtung 35 so ausgestaltet, dass sie durch das Anbringen des Anschlagelements 2 am Sicherungselement 3 zwangsläufig von der Aktivstellung in die Passivstellung überführt wird. Besonders zweckmäßig ist es nun, das Anlageelement 11, also insbesondere die Rolle 11 in die Auslöseeinrichtung 35 zu integrieren. Mit anderen Worten, die Rolle 11 bildet einen Bestandteil der Auslöseeinrichtung 35. Die Integration erfolgt dabei so, dass beim Anbringen des Anschlagelements 2 am Sicherungselement 3 das Anliegen bzw. Andrücken des Sicherungselements 3 am Anlageelement 11 dazu führt, dass die Auslöseeinrichtung 35 in ihre Passivstellung überführt wird. Die genaue Funktionsweise der Auslöseeinrichtung 35 wird im Folgenden anhand der Fig. 2 bis 4 näher erläutert, wobei zunächst auf den hier dargestellten, exemplarischen konkreten Aufbau der Auslöseeinrichtung 35 näher eingegangen wird.

Entsprechend den Fig. 2 bis 4 umfasst die Auslöseeinrichtung 35 einen Lagerhebel 44, der am Gehäuse 12 um eine Lagerhebel-Schwenkachse 36 schwenkverstellbar gelagert ist, die in den Fig. 2 bis 4 senkrecht zur Zeichnungsebene verläuft. Der Lagerhebel 44 ist mit der Riegeleinrichtung 9 antriebsgekoppelt. Somit ist die Auslöseeinrichtung 35 über den Lagerhebel 44 mit der Riegeleinrichtung 9 zwangsgekoppelt. Hierzu wirkt ein am Riegel 24 ausgebildeter Steuerbolzen 37 mit einer am Lagerhebel 44 ausgebildeten Steuerkulisse 38 zusammen. Durch diese Zwangskopplung verschwenkt der Lagerhebel 44 beim Betätigen des Riegels 44 zwischen zwei Endstellungen, von denen die eine dem Passivzustand der Auslöseeinrichtung 35 zugeordnet ist, die im Folgenden auch als Passiv-Endstellung bezeichnet wird, und von denen die andere dem Aktivzustand der Auslöseeinrichtung 35 zugeordnet ist, die im Folgenden auch als Aktiv-Endstellung bezeichnet wird. Im gezeigten Beispiel weist der Riegel 24 den weiter oben erwähnten weiteren Steuerbolzen 39 auf, der mit der am Sicherungshebel 26 ausgebildeten weiteren Steuerkulisse 40 zusammenwirkt. Dieses Zusammenspiel zwischen Steuerbolzen 39 und Steuerkulisse 40 ist hier außerdem so ausgelegt, dass der Riegel 24 in seiner Entriegelungsstellung den Sicherungshebel 26 in dessen Entsicherungsstellung blockiert. Somit blockiert letztlich der in seine Aktiv-Endstellung verschwenkte Lagerhebel 44 direkt den Riegel 24 in dessen Entriegelungsstellung und indirekt über den entriegelten Riegel 24 den Sicherungshebel 26 in dessen Entsicherungsstellung. Dieser Zustand ist in Fig. 4 wiedergegeben.

In der in den Fig. 2 und 3 wiedergegebenen Passiv-Endstellung des Lagerhebels 44 ermöglicht der Lagerhebel 44 ein Verschwenken des Riegels 24 in dessen Verriegelungsstellung sowie indirekt ein Verschwenken des Sicherungshebels 26 in dessen Sicherungsstellung.

Die Auslöseeinrichtung 35 weist außerdem einen Anlagehebel 45 auf, der hier das Anlageelement 11, also die Rolle 11 trägt. Grundsätzlich kann der Anlagehebel 45 auch selbst das Anlageelement 11 bilden. Der Anlagehebel 45 ist um eine Anlagehebel-Schwenkachse 46 am Gehäuse 12 schwenkverstellbar gelagert, die senkrecht zur Zeichnungsebene verläuft. An seinem von der Lagerstelle 46 entfernten Ende ist der Anlagehebel 45 über einen Kopplungshebel 47 mit dem Lagerhebel 44 antriebsmäßig gekoppelt. Der Kopplungshebel 47 ist über eine Lagerstelle 48 mit dem Lagerhebel 44 und über eine Lagerstelle 49 mit dem Lagerhebel 45 schwenkverstellbar verbunden.

In der Aktivstellung der Auslöseeinrichtung 35 (Fig. 4) ist der Anlagehebel 45 mit der Rolle 11 so positioniert, dass er durch das Anbringen des jeweiligen Anschlagelements 2 am jeweiligen Sicherungselement 3 zwangsläufig ein Überführen der Auslöseeinrichtung 35 in deren Passivstellung bewirkt. Hierzu ragt die Rolle 11 am Anlagehebel 45 in die Einführöffnung 16 hinein, um den Verstellweg des Sicherungselements 3 in der Einführöffnung 16 zu verkürzen, und zwar soweit, dass das Sicherungselement 3 beim Einführen über die ordnungsgemäße Anlage an der Rolle 11 zwangsläufig den Anlagehebel 45 betätigt und diesen somit um seine Schwenkachse 46 verschwenkt. Hierdurch wird über das Sicherungselement 3 die Rolle 11 mit dem Anlagehebel 45 in die der Passivstellung der Auslöseeinrichtung 35 zugeordnete Ausgangsstellung der Fig. 2 und 3 verschwenkt. In dieser Ausgangsstellung des Anlagehebels 45 bzw. der Rolle 11 bzw. in der Passivstellung der Auslöseeinrichtung 35 bildet die Rolle 11 das feste Ende der Einführöffnung 16. Das Sicherungselement 3 bewirkt beim Anhängen des Anschlagelements 2 eine Verdrängung der Rolle 11 bzw. ein Verstellen der Rolle 11 in der Einführöffnung 16. Spätestens bei einer Belastung des Anschlagelements 2 erfolgt das Verschwenken des Anlagehebels 45, was zwangsläufig zum Überführen der Auslöseeinrichtung 35 in deren Passivzustand zur Folge hat. Über den Kopplungshebel 47 verschwenkt dabei auch der Lagerhebel 44. Hierdurch wird zum einen der Riegel 24 freigegeben, wodurch dieser in seine Verriegelungsstellung verschwenken kann. Zum anderen gibt der Riegel 24 dann den Sicherungshebel 26 frei, so dass auch dieser in seine Sicherungsstellung verschwenken kann. Diese Bauweise hat zur Folge, dass mit dem Anhängen des Anschlagelements 2 am Sicherungselement 3 zwangsläufig der Riegel 24 in seine Verriegelungsstellung überführt wird, während gleichzeitig auch der Sicherungshebel 26 in seine Sicherungsstellung überführt wird. Dadurch kann sofort nach dem Anlegen des Anschlagelements 2 am Sicherungselement 3 eine effektive Personensicherung gewährleistet werden.

Der Lagerhebel 44 ist mit Hilfe eines Druckfederantriebs 41 in seine jeweilige Endstellung, also entweder in die Aktiv-Endstellung oder in die Passiv-Endstellung, vorgespannt. Besagter Druckfederantrieb 41 weist sowohl für die Aktivstellung als auch für die Passivstellung eine Übertotpunktstellung auf. Der Druckfederantrieb 41 ist einerseits bei einer mit 42 bezeichneten Lagerstelle am Sicherungshebel 26 abgestützt. Andererseits ist der Druckfederantrieb 41 an einer mit 43 bezeichneten Lagerstelle am Lagerhebel 44 abgestützt. Alternativ könnte der Druckfederantrieb 41 seine Lagerstelle 42 auch am Gehäuse 12 statt am Sicherungshebel 26 aufweisen.

In der in den Fig. 2 und 3 gezeigten Passivstellung der Auslöseeinrichtung 35 befindet sich die lagerhebelseitige Lagerstelle 43 rechts von einer durch die sicherungshebelseitige Lagerstelle 42 und durch die Lagerhebel-Schwenkachse 36 gehenden gedachten Geraden. Im Unterschied dazu befindet sich die lagerhebelseitige Lagerstelle 43 in der in Fig. 4 gezeigten Aktivstellung der Auslöseeinrichtung 35 links von der genannten Geraden, die durch die sicherungshebelseitige Lagerstelle 42 und durch die Lagerhebel-Schwenkachse 36 geht. Um von der einen Stellung zur anderen zu gelangen, muss also der Abstand zwischen den beiden Lagerstellen 42, 43 des Druckfederantriebs 41 bis zur Totpunktstellung verkürzt werden, in welcher die beiden Lagerstellen 42, 43 und die Lagerhebel-Schwenkachse 36 auf einer gemeinsamen Geraden liegen. Dementsprechend sind die beiden Endstellungen des Lagerhebels 44, also die Aktivstellung und die Passivstellung der Auslöseeinrichtung 35 stabile Übertotpunktstellungen. Um von der einen Stellung in die andere Stellung zu gelangen, muss besagte labile Totpunktstellung überwunden werden. Bis dahin muss der Lagerhebel 44 gegen die Rückstellkraft des Druckfederantriebs 41 verschwenkt werden. Beim Überwinden der Totpunktstellung treibt der Druckfederantrieb 41 den Lagerhebel 44 dann selbsttätig in die jeweils andere Stellung an.

Bei den hier gezeigten Ausführungsformen ist der Riegel 24 als direkt manuell betätigbarer Riegel 24 ausgestaltet, der beispielsweise mittels Zeigefinder und Mittelfinger betätigbar ist. Gleichzeitig ist der Sicherungshebel 26 hier als direkt manuell betätigbarer Sicherungshebel 26 ausgestaltet, der beispielsweise mit einem Daumen betätigbar ist. Sicherungshebel 26 und Riegel 24 sind hier an einander gegenüberliegenden Seiten des jeweiligen Anschlagelements 2 angeordnet, wodurch eine Einhandbedienung möglich ist.

Mit Bezug auf die Fig. 2 bis 4 soll im Folgenden noch kurz ein Entriegelungsvorgang bzw. ein Verriegelungsvorgang erläutert werden. In Fig. 2 liegt der Verriegelungszustand der Riegeleinrichtung 9 vor. Der Riegel 24 weist seine Verriegelungsstellung auf. Erkennbar verschließt dabei der Riegel 24 in seiner Verriegelungsstellung die Einführöffnung 16, so dass es nicht möglich ist, das Anschlagelement 2 zerstörungsfrei vom Sicherungselement 3 zu entfernen. Der Sicherungshebel 26 nimmt seine Sicherungsstellung ein. Die Auslöseeinrichtung 35 befindet sich in ihrer Passivstellung. Der Sperrhebel 22 befindet sich in seiner Ruhelage. Das Sicherungselement 3 befindet sich in der Aufnahme 15. Insbesondere liegt die Rolle 11 auf dem Sicherungselement 3 auf.

Im gezeigten, bevorzugten Beispiel ist am Gehäuse 12 im Bereich der Einführöffnung 16 ein Anschlag 50 ausgebildet, an dem der Riegel 24 in seiner Verriegelungsstellung zur Anlage kommt, und zwar an einem von der Riegel-Schwenkachse 25 entfernten Endbereich des Riegels 24. Bei der hier gezeigten, bevorzugten Ausführungsform weist das Gehäuse 12 im Bereich des Anschlags 50 außerdem einen Haken 51 auf, der in eine am Riegel 24 ausgebildete Hakenaufnahme 52 eingreift, wenn der Riegel 24 seine Verriegelungsstellung einnimmt. Hierdurch wird innerhalb des Gehäuses 12 ein geschlossener Kraftpfad ausgebildet, in welchen der Riegel 24 eingebunden ist. Hierdurch erhält das hakenförmig ausgestaltete Anschlagelement 2 eine besonders hohe Stabilität für den Sicherungsfall.

Zum Entsichern betätigt der Anwender gemäß Fig. 3 zunächst den Sicherungshebel 26, um diesen in die Entsicherungsstellung zu verschwenken. Zwangsläufig wird dabei der Sperrhebel 22 betätigt, wodurch dieser in die Sperrstellung verschwenkt. Anschließend betätigt der Anwender gemäß Fig. 4 den Riegel 24 und verschwenkt diesen in die Entriegelungsstellung. Bei diesem Schwenkvorgang wird der Lagerhebel 44 zwangsläufig mit verstellt, da der Riegel 24 hier zum Antreiben des Lagerhebels 44 vorgesehen ist. Über das Verschwenken des Lagerhebels 44 ist auch der Anlagehebel 45 zum Verschwenken um seine Schwenkachse 46 angetrieben. Hierdurch verschwenkt die Rolle 11 durch den Aufnahmeraum 15 hindurch und treibt das Sicherungselement 3 aus dem Aufnahmeraum 15 heraus. Dies ist jedoch nur möglich, wenn das Anschlagelement 2 im Wesentlichen unbelastet ist, also nicht zur Sicherung der Person benötigt wird. Unter Last, also wenn beispielsweise das Gewicht der Person über das Anschlagelement 2 und somit über die Rolle 11 auf das Sicherungselement 3 übertragen wird, lässt sich über die Zwangskopplung zwischen Auslöseeinrichtung 35 und Riegeleinrichtung 9 der Riegel 24 quasi nicht in seine Entriegelungsstellung verschwenken. Hierdurch kann ein versehentliches Öffnen des belasteten Anschlagelements 2 effektiv vermieden werden.

Beim Anbringen des Anschlagelements 2 am Sicherungselement 3 verdrängt nun das Sicherungselement 3 den Anlagehebel 45, wodurch die Auslöseeinrichtung 35 nach Überwindung der Totpunktstellung des Lagerhebels 44 selbsttätig in ihre Passivstellung schnappt. Dabei wird zum einen der Riegel 24 in dessen Verriegelungsstellung zwangsläufig angetrieben. Zum anderen wird dadurch auch der Sicherungshebel 26 wieder freigegeben, wodurch dieser in die Sicherungsstellung verschwenken kann. Der Sicherungshebel 26 kann dabei federbelastet sein. Im Beispiel ist der Sicherungshebel 26 durch den Druckfederantrieb 41 angetrieben.

Bei einem Hochseilgarten wird beispielsweise als Sicherungselement 3 ein Drahtseil mit einem bestimmten Durchmesser verwendet. Dieses Sicherungsseil 3 wird häufig auch als Lebenslinie oder Lifeline bezeichnet. Im Unterschied dazu werden für den Aufbau des Hochseilgartens eine Vielzahl von Befestigungsseilen verwendet, bei denen es sich beispielsweise um Hanfseile oder um Drahtseile mit Kunststoffhülle handelt. Jedenfalls besitzen diese anderen Seile einen größeren Außendurchmesser als das Sicherungsseil 3. Die Dimensionierung des Anschlagelements 2 und insbesondere der Einführöffnung 16 ist zweckmäßig gezielt so ausgelegt, dass das Anschlagelement 2 nur am Sicherungsseil 3 einhängbar ist und nicht an einem der dickeren anderen Seile. Auch hierdurch kann die Betriebssicherheit der Sicherungseinrichtung 1 bzw. des Hochseilgartens verbessert werden.

## Patentansprüche

1. Anschlagelement für eine Sicherungseinrichtung (1) zum Schutz von Personen vor Absturz,
- wobei das Anschlagelement (2) an einem Sicherungselement (3) lösbar anbringbar ist und über ein Verbindungselement (4) mit der zu sichernden Person verbindbar ist,
- wobei das Anschlagelement (2) zumindest ein Anlageelement (11) aufweist, an dem das Sicherungselement (3) bei daran angebrachtem Anschlagelement (2) zur Anlage kommt,
- wobei das Anschlagelement (2) eine Riegeleinrichtung (9) aufweist, die zwischen einem Entriegelungszustand, in dem das Anschlagelement (2) am Sicherungselement (3) anbringbar und davon lösbar ist, und einem Verriegelungszustand verstellbar ist, in dem das Anschlagelement (2) nicht vom Sicherungselement (3) lösbar ist,
- wobei die Riegeleinrichtung (9) eine zwischen einer Aktivstellung und einer Passivstellung verstellbare Auslöseeinrichtung (35) aufweist, die in ihrer Aktivstellung die Riegeleinrichtung (9) in deren Entriegelungszustand blockiert und die durch das Anbringen des Anschlagelements (2) am Sicherungselement (3) in ihre Passivstellung überführbar ist, in welcher sie ein Verstellen der Riegeleinrichtung (9) in deren Verriegelungszustand ermöglicht,
**dadurch gekennzeichnet,**
**dass** das Anlageelement (11) einen Bestandteil der Auslöseeinrichtung (35) bildet, derart, dass die Auslöseeinrichtung (35) durch die Anlage des Sicherungselements (3) am Anlageelement (11) in ihre Passivstellung verstellbar ist.

2. Anschlagelement nach Anspruch 1,
**dadurch gekennzeichnet,**
**dass** die Auslöseeinrichtung (35) einen Lagerhebel (44) aufweist, der schwenkverstellbar gelagert ist und der mit der Riegeleinrichtung (9) antriebsgekoppelt ist.

3. Anschlagelement nach Anspruch 2,
**dadurch gekennzeichnet,**
**dass** der Lagerhebel (44) mit einem Riegel (24) der Riegeleinrichtung (9) antriebsgekoppelt ist, der zwischen einer dem Verriegelungszustand der Riegeleinrichtung (9) zugeordneten Verriegelungsstellung und einer dem Entriegelungszustand der Riegeleinrichtung (9) zugeordneten Entriegelungsstellung verschwenkbar ist.

4. Anschlagelement nach Anspruch 3,
**dadurch gekennzeichnet,**
**dass** der Lagerhebel (44) mit einem Sicherungshebel (26) der Riegeleinrichtung (9) antriebsgekoppelt ist, der zwischen einer den Riegel (24) in dessen Verriegelungsstellung blockierenden Sicherungsstellung und einer ein Verschwenken des Riegels (24) zwischen dessen Verriegelungsstellung und dessen Entriegelungsstellung ermöglichenden Entsicherungsstellung verschwenkbar ist.

5. Anschlagelement nach einem der Ansprüche 1 bis 4,
**dadurch gekennzeichnet,**
**dass** die Auslöseeinrichtung (35) einen Anlagehebel (45) aufweist, der das Anlageelement (11) aufweist oder bildet und der beim Anbringen des Anschlagelements (2) am jeweiligen Sicherungselement (3) zwangsläufig zum Verschwenken angetrieben ist.

6. Anschlagelement nach Anspruch 5,
**dadurch gekennzeichnet,**
**dass** der Anlagehebel (45) so verschwenkbar angeordnet ist, dass das Anlageelement (11) in der Aktivstellung der Auslöseeinrichtung (35) einen Verstellweg, den das Sicherungselement (3) beim Anbringen des Anschlagelements (2) durch eine Einführöffnung (16) zum Anliegen am Anlageelement (11) zurücklegen muss, verkürzt im Vergleich zu einer Stellung, die der Anlagehebel (45) in der Passivstellung der Auslöseeinrichtung (35) einnimmt.

7. Anschlagelement nach Anspruch 5 oder 6,
**dadurch gekennzeichnet,**
**dass** das Anlageelement eine am Anlagehebel (45) drehbar gelagerte Rolle (11) ist.

8. Anschlagelement nach einem der Ansprüche 5 bis 7,
**dadurch gekennzeichnet,**
**dass** die Auslöseeinrichtung (35) einen Kopplungshebel (47) aufweist, der den Lagerhebel (44) mit dem Anlagehebel (45) verbindet.

9. Anschlagelement nach einem der Ansprüche 1 bis 8,
**dadurch gekennzeichnet,**
**dass** die Auslöseeinrichtung (35) mit der Riegeleinrichtung (9) derart zwangsgekoppelt ist, dass ein Verstellen der Riegeleinrichtung (9) in deren Entriegelungszustand zwangsweise eine Verstellung der Auslöseeinrichtung (35) in deren Aktivstellung bewirkt.

10. Anschlagelement nach einem der Ansprüche 1 bis 9,
**dadurch gekennzeichnet,**
**dass** die Auslöseeinrichtung (35) so aufgebaut ist, dass die Aktivstellung und die Passivstellung jeweils eine stabile Übertotpunktlage darstellen, die über eine labile Zwischenlage erreichbar sind.

11. Anschlagelement nach einem der Ansprüche 1 bis 10,
**dadurch gekennzeichnet,**
**dass** der Riegel (24) der Riegeleinrichtung (9) eine Hakenaufnahme (52) aufweist, in die ein am Gehäuse (12) ausgebildete Haken (51) eingreift, wenn der Riegel (24) seine Verriegelungsstellung einnimmt.

12. Sicherungseinrichtung zum Schutz von Personen vor Absturz, mit mindestens einem Anschlagelement (2) nach einem der Ansprüche 1 bis 11.

13. Sicherungseinrichtung nach Anspruch 12,
**dadurch gekennzeichnet,**
- **dass** zwei Anschlagelemente (2) vorgesehen sind,
- **dass** eine Kopplungseinrichtung (10) vorgesehen ist, die mit den Riegeleinrichtungen (9) der beiden Anschlagelemente (2) gekoppelt ist, derart, dass sie im Entriegelungszustand der Riegeleinrichtung (9) des einen Anschlagelements (2) die Riegeleinrichtung (9) des anderen Anschlagelements in (2) in deren Verriegelungszustand blockiert.

## Claims

1. A stop element for a securing device (1) for protecting persons from falling,
- wherein the stop element (2) is able to be attached releasably to a securing element (3) and is able to be connected by means of a connecting element (4) to the person who is to be secured,
- wherein the stop element (2) has at least one contact element (11) on which the securing element (3) comes to bear when the stop element (2) is attached thereto,
- wherein the stop element (2) has a locking device (9), which is able to be shifted between an unlocking state, in which the stop element (2) is able to be attached to the securing element (3) and is releasable therefrom, and a locked state, in which the stop element (2) is not releasable from the securing element (3),
- wherein the locking device (9) has an actuating device (35) which is able to be shifted between an active position and a passive position, which in its active position blocks the locking device (9) in its unlocked state and which through the attaching of the stop element (2) to the securing element (3) is able to be transferred into its passive position, in which it enables a shifting of the locking device (9) into its locked state,
**characterized in**
**that** the contact element (11) forms a component part of the actuating device (35), such that the actuating device (35) is able to be shifted into its passive position through the contact of the securing element (3) on the contact element (11).

2. The stop element according to claim 1, **characterized in**
**that** the actuating device (35) has a bearing lever (44), which is mounted in a pivotably adjustable manner and which is drive-coupled to the locking device (9).

3. The stop element according to claim 2,
**characterized in**
**that** the bearing lever (44) is drive-coupled to a lock (24) of the locking device (9), which lock is able to be pivoted between a locked position, associated with the locked state of the locking device (9), and an unlocked position, associated with the unlocked state of the locking device (9).

4. The stop element according to claim 3,
**characterized in**
**that** the bearing lever (44) is drive-coupled to a securing lever (26) of the locking device (9), which is able to be pivoted between a securing position blocking the lock (24) in its locked position, and a releasing position enabling a pivoting of the lock (24) between its locked position and its unlocked position.

5. The stop element according to one of claims 1 to 4,
**characterized in**
**that** the actuating device (35) has a contact lever (45), which has or forms the contact element (11) and which is positively driven to pivot when the stop element (2) is attached to the respective securing element (3).

6. The stop element according to claim 5,
**characterized in**
**that** the contact lever (45) is pivotably arranged so that the contact element (11) in the active position of the actuating device (35) shortens a shifting path which the securing element (3) must cover on mounting of the stop element (2) through an introduction opening (16) for bearing against the contact element (11), compared to a position which the contact lever (45) assumes in the passive position of the actuating device (35).

7. The stop element according to claim 5 or 6,
**characterized in**
**that** the contact element is a roller (11) mounted rotatably on the contact lever (45).

8. The stop element according to one of claims 5 to 7,
**characterized in**
**that** the actuating device (35) has a coupling lever (47) which connects the bearing lever (44) with the contact lever (45).

9. The stop element according to one of claims 1 to 8,
**characterized in**
**that** the actuating device (35) is positively coupled to the locking device (9) such that a shifting of the locking device (9) into its unlocked state compulsorily brings about a shifting of the actuating device (35) into its active position.

10. The stop element according to one of claims 1 to 9,
**characterized in**
**that** the actuating device (35) is constructed so that the active position and the passive position respectively constitute a stable over dead centre position, which are able to be reached via a labile intermediate position.

11. The stop element according to one of claims 1 to 10,
**characterized in**
**that** the lock (24) of the locking device (9) has a hook mount (52), into which a hook (51), formed on the housing (12), engages when the lock (24) assumes its locked position.

12. A securing device for protecting persons from falling, with at least one stop element (2) according to one of claims 1 to 11.

13. The securing device according to claim 12,
**characterized in**
- **that** two stop elements (2) are provided,
- **that** a coupling device (10) is provided, which is coupled to the locking devices (9) of the two stop elements (2) such that in the unlocked state of the locking device (9) of the one stop element (2) it blocks the locking device (9) of the other stop element (2) in its locked state.

## Revendications

1. Élément de butée pour un dispositif de sécurité (1) pour la protection des personnes contre les chutes,
- dans lequel l'élément de butée (2) peut être appliqué de façon séparable sur un élément de sécurité (3) et peut être relié à la personne à sécuriser par le biais d'un élément de liaison (4),
- dans lequel l'élément de butée (2) présente au moins un élément de support (11) sur lequel l'élément de sécurité (3) vient s'appuyer lorsque l'élément de butée (2) est appliqué dessus,
- dans lequel l'élément de butée (2) présente un dispositif de verrou (9) qui peut être réglé entre un état de déverrouillage dans lequel l'élément de butée (2) peut être appliqué sur l'élément de sécurité (3) et en être séparé, et un état de verrouillage dans lequel l'élément de butée (2) ne peut pas être séparé de l'élément de sécurité (3),
- dans lequel le dispositif de verrou (9) présente un dispositif de déclenchement (35) pouvant passer entre une position active et une position passive qui, dans sa position active, bloque le dispositif de verrou (9) dans sa position de déverrouillage et qui peut être amené dans sa position passive par l'application de l'élément de butée (2) sur l'élément de sécurité (3), dans laquelle il permet un réglage du dispositif de verrou (9) dans son état de verrouillage,
**caractérisé en ce**
**que** l'élément de butée (11) fait partie intégrante du dispositif de déclenchement (35), de telle sorte que le dispositif de déclenchement (35) peut être réglé dans sa position passive par l'appui de l'élément de sécurité (3) sur l'élément de support (11).

2. Élément de butée selon la revendication 1,
**caractérisé en ce**
**que** le dispositif de déclenchement (35) présente un levier d'appui (44) qui est disposé en pouvant être réglé par pivotement et qui est couplé en entraînement avec le dispositif de verrou (9).

3. Élément de butée selon la revendication 2,
**caractérisé en ce**
**que** le levier d'appui (44) est couplé en entraînement à un verrou (24) du dispositif de verrou (9) qui peut pivoter entre une position de verrouillage correspondant à l'état de verrouillage du dispositif de verrou (9) et une position de déverrouillage correspondant à l'état de déverrouillage du dispositif de verrou (9).

4. Élément de butée selon la revendication 3,
**caractérisé en ce**
**que** le levier d'appui (44) est couplé en entraînement à un levier de sécurité (26) du dispositif de verrou (9), qui peut pivoter entre une position de sécurité bloquant le verrou (24) dans sa position de verrouillage et une position de sûreté retirée permettant un pivotement du verrou (24) entre sa position de verrouillage et sa position de déverrouillage.

5. Élément de butée selon l'une des revendications 1 à 4,
**caractérisé en ce**
**que** le dispositif de déclenchement (35) présente un levier de support (45) qui présente ou forme l'élément de support (11) et qui est entraîné par force vers le pivotement lorsque l'élément de butée (2) est appliqué sur l'élément de sécurité (3) respectif.

6. Élément de butée selon la revendication 5,
**caractérisé en ce**
**que** le levier de support (45) peut être ainsi pivoté que l'élément de butée (11), dans la position active du dispositif de déclenchement (35), réduit un trajet de réglage que l'élément de sécurité (3) lorsque l'élément de butée (2) est appliqué, doit parcourir par une ouverture d'introduction (16) pour s'appuyer sur l'élément de support (11), par comparaison avec une position que le levier de butée (45) adopte dans la position passive du dispositif de déclenchement (35).

7. Élément de butée selon la revendication 5 ou 6,
**caractérisé en ce**
**que** l'élément de butée est un rouleau (11) disposé rotatif sur le levier de support (45).

8. Élément de butée selon l'une des revendications 5 à 7,
**caractérisé en ce**
**que** le dispositif de déclenchement (35) présente un levier de couplage (47) qui relie le levier d'appui (44) au levier de support (45).

9. Élément de butée selon l'une des revendications 1 à 8,
**caractérisé en ce**
**que** le dispositif de déclenchement (35) est couplé de telle façon par force au dispositif de verrou (9) qu'un réglage du dispositif de verrou (9) dans son état de déverrouillage a pour effet un réglage forcé du dispositif de déclenchement (35) dans sa position active.

10. Élément de butée selon l'une des revendications 1 à 9,
**caractérisé en ce**
**que** le dispositif de déclenchement (35) est ainsi construit que la position active et la position passive représentent respectivement une position au-delà du point mort stable qui peut être atteinte par une position intermédiaire labile.

11. Élément de butée selon l'une des revendications 1 à 10,
**caractérisé en ce**
**que** le verrou (24) du dispositif de verrou (9) présente une réception de crochet (52) dans laquelle un crochet (51) formé sur le boîtier (12) s'engage lorsque le verrou (24) adopte sa position de verrouillage.

12. Dispositif de sécurité pour protéger des personnes des chutes, comprenant au moins un élément de butée (2) selon l'une des revendications 1 à 11.

13. Dispositif de sécurité selon la revendication 12, **caractérisé en ce**
- **que** deux éléments de butée (2) sont prévus,
- **qu'**un dispositif de couplage (10) est prévu qui est couplé avec les dispositifs de verrou (9) des deux éléments de butée (2) de telle sorte qu'il bloque, dans l'état de déverrouillage du dispositif de verrou (9) de l'un élément de butée (2), le dispositif de verrou (9) de l'autre éléments de butée (2) dans son état de verrouillage.
